# EUROPÄISCHE PATENTSCHRIFT

(11) **EP 3 483 770 B1**
(45) Veröffentlichungstag und Bekanntmachung des Hinweises auf die Patenterteilung: **15.01.2025**
(21) Anmeldenummer: 18205636.6
(22) Anmeldetag: 12.11.2018
(51) Int. Cl.: G06F 21/64

(54) **VERFAHREN ZUR SPEICHERUNG ELEKTRONISCH SIGNIERTER DOKUMENTE**
METHOD FOR STORING ELECTRONICALLY SIGNED DOCUMENTS
PROCÉDÉ DE STOCKAGE DES DOCUMENTS SIGNÉS ÉLECTRONIQUEMENT

(30) Priorität: 10.11.2017 DE 102017126483
(43) Veröffentlichungstag der Anmeldung: 15.05.2019
(73) Patentinhaber: Munz, Wolfgang, 74405 Gaildorf (DE)
(72) Erfinder: Munz, Wolfgang, 74405 Gaildorf (DE)
(74) Vertreter: Christ, Niko

(56) Entgegenhaltungen:
- EP-B1- 1 617 590
- WO-A1-01/13574
- AT-B1- 509 043
- AT-B1- 509 043
- US-A1- 2016 335 479

## Beschreibung

Die vorliegende Erfindung betrifft ein Verfahren zur Speicherung elektronisch signierter Dokumente, bei dem einem elektronisch signierten Dokument wenigstens eine im Zusammenhang mit dem signierten Dokument in einer Datenbank eines Datenbankservers gespeicherte Signaturdatei eines Unterzeichners des signierten Dokuments als Verknüpfung zwischen dem Dokument selbst und einem dem Unterzeichner eindeutig zugeordneten Zertifikat zugeordnet ist.

Ein solches Verfahren ist bereits aus der AT 509 043 B1 vorbekannt. Als weiterer Stand der Technik ist auf die WO 01/13574 A1 und die US 2016/335479 A1 hinzuweisen.

Derartige Verfahren sind bereits im Stand der Technik vielfältig bekannt. Bereits seit vielen hundert Jahren werden Verträge, Erklärungen und andere Dokumente unterschiedlichster Art durch ihre Signatur authentifiziert. Die Signatur macht aus einem einfachen Schriftstück ein bindendes Dokument, so dass schon seit jeher in Frage gezogen wurde, ob eine Signatur echt war. So wurden Rechtsakte im Mittelalter durch gestempelte Siegel beurkundet, welche für die damalige Zeit praktisch fälschungssicher waren.

Später setzte sich in Europa die handschriftliche Unterzeichnung, gegebenenfalls auch vor Zeugen, als verbindliche Signatur durch, während in Asien bis heute häufig Namensstempel Verwendung finden. Besonders wichtige Verträge werden auch heute noch vor dem Notar unterzeichnet um sich auch auf dessen Zeugnis berufen zu können.

Diese Lösungen lassen sich allerdings nur mehr als unvollkommen auf den elektronischen Rechtsverkehr übertragen, wo vor allem auch die Kommunikation und die Unterzeichnung von Verträgen oder anderen Dokumenten nicht mehr zwingend in Gegenwart des Vertragspartners oder Erklärungsempfängers erfolgt.

Eine einfache, recht rudimentäre Möglichkeit, die handschriftliche Signatur auf den elektronischen Rechtsverkehr zu übertragen, besteht in der Verwendung einer Bildwiedergabe einer Unterschrift. Diese kann mit entsprechender Software entweder als Ganzes auf einem Unterschriftsfeld platziert werden, oder wird über ein elektronisches Eingabemittel direkt in ein Eingabefeld übertragen. Dadurch, dass das Gegenüber aber bei der Unterzeichnung in aller Regel nicht persönlich anwesend ist, besteht die Gefahr, dass die Signatur von einer dazu nicht autorisierten Person eingesetzt wird und somit im Namen des Unterzeichners ein Rechtsgeschäft abgeschlossen wird, welches dieser gegebenenfalls nicht abschließen wollte oder von dem er gar nichts weiß.

Einen Schritt weiter macht ein bekanntes System, bei dem ein Dokument, welches in der so genannten Cloud, also einem über das Internet zugreifbaren Datenbanksystem, abgespeichert wird. Um eine Unterschrift zu diesem Dokument zu erhalten wird ein Anschreiben an eine E-Mail-Adresse des gewünschten Unterzeichners geschickt, der dann durch einen Klick auf einen Internetverweis das Dokument unterzeichnen kann. Die Authentifizierung basiert bei diesem System jedoch ausschließlich auf der Annahme, dass die E-Mail den gewünschten Empfänger auch erreicht. Wenn etwa aufgrund abgefangener EMails, E-Mail-Weiterleitungen oder gemeinsam genutzter Zugangsdaten eine dritte Person Zugriff auf dieses Anschreiben erhält, dann kann ohne weitere Authentifizierung diese dritte Person das Rechtsgeschäft im Namen des Angeschriebenen abschließen.

Ist einmal ein Dokument unterzeichnet und liegt es in diesem Zustand in einem Onlinearchiv, so kann wiederum auch nicht sichergestellt werden, dass nach der Unterschrift kein weiterer Einfluss auf das Dokument genommen wird. Ein einmal auf die oben genannte Art und Weise signiertes Dokument könnte manipuliert und mit Änderungen wieder abgespeichert werden, ohne dass dies einem späteren Betrachter zwangsläufig auffallen müsste.

Vor diesem Hintergrund liegt der vorliegenden Erfindung die Aufgabe zu Grunde, ein Verfahren zur Speicherung elektronisch signierter Dokumente anzugeben, welches die Nachteile des Standes der Technik überwindet und sowohl eine sichere Art der Verwahrung unterzeichneter Dokumente ermöglicht, als auch ein damit verbundenes Verfahren zur Signierung elektronischer Dokumente.

Gelöst wird diese Aufgabe durch ein Verfahren gemäß den Merkmalen des Anspruchs 1. Weitere sinnvolle Ausgestaltungen eines solchen Verfahrens können den Unteransprüchen entnommen werden.

Erfindungsgemäß wird im weitesten Sinne eine Datenbank realisiert, in welcher ein Dokument abgelegt wird, welches eine verbindliche Signatur erhalten soll. Unter einem Dokument ist jede Art von binärem Inhalt zu verstehen, also sowohl Textdokumente, als auch Videos, Bilder, oder auch Datenströme. Eine Datenbank kann hierbei ein dediziertes Datenbanksystem sein, oder auch ein einfacher, etwa über eine Verzeichnisstruktur organisierter Speicher. Sobald die Signatur erfolgt ist, was von beliebig vielen Unterzeichnern je Dokument geleistet werden kann, wird mithilfe eines dem wenigstens einen Unterzeichner eineindeutig zugeordneten Zertifikats eine Signaturdatei erzeugt und im Zusammenhang mit dem Dokument in der Datenbank gespeichert, also mit diesem verknüpft. Im Falle eines einzelnen Unterzeichners besteht ein vollständig unterzeichnetes Dokument folglich aus dem Dokument selbst, sowie einer Signaturdatei, welche eine Verknüpfung zwischen einem Zertifikat und dem Dokument selbst ist.

Ein optionaler Aspekt der Erfindung ist es, dass zu der Signaturdatei und dem Dokument selbst von dem Datenbankserver, welcher die Datenbank zugeordnet ist, jeweils ein elektronischer Fingerabdruck erstellt wird, vorzugsweise zusätzlich ein weiterer elektronischer Fingerabdruck über die Gesamtheit aller Komponenten hinweg. Wird die dem Dokument zugeordnete Unterschrift in Frage gestellt, so werden beide Dateien und gegebenenfalls auch ihr Verbund anhand der Fingerabdrücke hinsichtlich ihrer Integrität geprüft und verifiziert. Nur wenn die Integrität aller Bestandteile gewahrt ist, kann mit Sicherheit festgestellt werden, dass es sich noch um das Dokument und die dazugehörige Unterschrift handelt.

Dabei kann eine Erstellung eines solchen Fingerabdrucks, sowie umgekehrt die Integritätsprüfung eines solchen seitens des Datenbankservers etwa dadurch vorgenommen werden, dass eine Prüfsummenberechnung durchgeführt wird. Auch die Verwendung einer so genannten Streuwertfunktion oder auch Hashfunktion ist eine verbreitete Möglichkeit einer solchen Erstellung eines elektronischen Fingerabdrucks. Es handelt sich dabei um eine Abbildung von komplexen Eingabewerten auf kompakte Hashwerte, die vorzugsweise skalare Variablen sind. Durch die Berechenbarkeit eines skalaren Hashwertes zu komplexen Eingabewerten wird ein kompakter elektronischer 'Fingerabdruck' eines Dokuments abgeleitet, der schnell geprüft werden kann. Weicht ein Dokument von dem anderen ab, so weicht im Falle einer perfekten, also eindeutigen, Hashfunktion auch sein Hashwert ab.

Um dann später bei der Integritätsprüfung herauszufinden, ob die Prüfsummen bzw. Hashwerte zu den Dateien, also Signaturdatei und Dokument passen, werden diese anhand der vorliegenden Dokumente neu berechnet und mit der hinterlegten elektronischen Signaturdatei verglichen. Weicht die hinterlegte Signaturdatei von den neu berechneten Werten ab, so ist die Integrität des Dokuments infrage zu stellen. Dies kann etwa über einen Internetbrowser erfolgen, über den auf den Datenbankserver zugegriffen wird. Jedoch kann dies auch entweder über eine Mobilgeräte-App direkt erfolgen, gegebenenfalls unter Verwendung eines QR-Codes, der über das Mobilgerät eingelesen und hierüber aufgerufen wird.

Auch andere mögliche Formen elektronischer Signaturen für Dokumente sind ohne Weiteres einsetzbar und können sich nahtlos in den Kontext der Erfindung einfügen, eine Beschränkung der Erfindung auf Prüfsummen oder Hashfunktionen soll hingegen nicht ausgesprochen werden.

Wird nunmehr ein Dokument in der Datenbank abgelegt, so wird der Datenbankserver zunächst bereits einen elektronischen Fingerabdruck erstellen, und es so vor Veränderungen schützen. Dann kann die Person, welche das Dokument einspeichert, oder eine andere hierzu berechtigte Person, dem Dokument die Kennung eines Unterzeichners hinzufügen, von welchem eine Signatur benötigt wird. Hierbei muss es sich nicht um die Unterschrift eines Vertrages und dergleichen handeln, vielmehr kann auch eine einfache Freigabe eines Auftrags, Bestätigung der Echtheit von Informationen und vieles mehr durch das Einspeichern und anschließende Signieren eines entsprechenden Dokuments über die erfindungsgemäße Lösung abgewickelt werden.

Eine Kennung des Unterzeichners muss im Vorfeld bereits bei dem Datenbankserver hinterlegt worden sein, wobei hier mit Authentifizierungsstufen unterschiedlicher Stärke gearbeitet werden kann. Das System sieht vor, einfache oder komplexere Authentifizierungen zu ermöglichen, welche im Vorfeld der Benutzung des Systems einmalig erfolgen müssen. Nach der einmaligen Authentifizierung läuft das erfindungsgemäße Verfahren für alle Authentifizierungsstufen gleich ab. Ist beispielsweise ein Unterzeichner persönlich bekannt, so bekommt er eine hohe Authentifizierungsstufe. Erfolgt eine Authentifizierung nur per E-Mail, so ist die Authentifizierungsstufe außerordentlich niedrig.

Sobald die Kennung des gewünschten Unterzeichners eingespeichert ist, wird der Datenbankserver die Kennung mit dem zu signierenden Dokument verknüpfen und damit den zugehörigen Unterzeichner des Dokuments festlegen. Es ist damit verunmöglicht, dass ein anderer Unterzeichner das Dokument signiert. Passen bei der Authentifizierung des Unterzeichners die Signaturdatei des Unterzeichners und die dem Dokument zugeordnete Kennung nicht zusammen, so wird der Datenbankserver die Signatur nicht akzeptieren. Akzeptiert der Datenbankserver hingegen die Signaturdatei des Unterzeichners, weil diese zu der Kennung passt, so wird der Datenbankserver die vom Unterzeichner bereitgehaltene Signaturdatei in der Datenbank ablegen und mit dem Dokument verknüpfen. Zu Signaturdatei und Verknüpfung werden ebenfalls elektronische Fingerabdrücke erstellt.

Mit einigem Vorteil wird die Signaturdatei von einem Mobilgerät des Unterzeichners importiert, auf dem der Unterzeichner zum einen das Zertifikat vorhält, zum anderen eine Authentifizierung leisten kann. Dazu muss das Mobilgerät neben dem Zertifikat an sich über eine Identifizierung des Dokuments und Mittel zur Authentifizierung des Unterzeichners verfügen.

Im einzelnen kann eine Identifizierung des Dokuments bereits dadurch erfolgen, dass das Dokument auf einem Bildschirm des Mobilgeräts dargestellt wird. Das Mobilgerät verknüpft dann das dargestellte Dokument mit der Freigabe des Unterzeichners und wird nach dessen Authentifizierung die Signaturdatei anhand des auf dem Mobilgerät gespeicherten Zertifikats generieren und auf den Datenbankserver hochladen. Erhält der Unterzeichner das Dokument hingegen per Post oder öffnet er das Dokument, etwa des besseren Lesekomforts wegen nicht auf seinem Mobilgerät, sondern auf einem anderen Gerät, so kann ein dem Dokument zugeordneter, maschinenlesbarer grafischer Code, wie etwa ein QR-Code, Barcode oder dergleichen mehr, von einer optischen Leseeinrichtung des Mobilgeräts eingelesen werden. Hierdurch kann das Mobilgerät einen Bezug zwischen dem zu unterzeichnenden Dokument und dem Zertifikat herstellen, wenn es die Signaturdatei dem Datenbankserver zum Upload anbietet.

Damit der Unterzeichner jedoch überhaupt Kenntnis davon erhält, dass ein Dokument zur Unterzeichnung vorliegt, wird der Datenbankserver dem Unterzeichner an eine mit dessen Kennung verbundene Adresse, sei es durch eine E-Mail, eine Push-Nachricht an eine Mobilgeräte-Applikation, eine SMS oder ähnliche persönlich durch den Unterzeichner empfängliche Nachrichten, senden und den Unterzeichner dadurch von dem zu unterzeichnenden Dokument unterrichten. Vorteilhafterweise wird der Notifikation direkt ein Link zu dem Dokument in der Datenbank zugeordnet, mit der das Dokument mithilfe der Mobilgeräte-Applikation oder auch über einen Internetbrowser geöffnet werden kann. Von dort aus läuft der beschriebene Prozess der Signierung ab. Im Fall eines Einsatzes einer Mobilgeräte-Applikation kann der Schritt des QR-Scans auch entfallen, da die Mobilgeräte-Applikation direkt auf die hinterlegten Daten zugreifen kann.

Ein Zertifikat kann jeweils unter unterschiedlichen Gesichtspunkten erstellt werden. Die Ausgabe von Zertifikaten kann zudem bestimmten Institutionen vorbehalten sein. Insbesondere können dies hierfür speziell vorgesehene externe Zertifikatsautoritäten sein, welche Zertifikate im Rahmen ihrer Dienstleistungen erstellen und einen entsprechenden Ruf genießen. Ferner können Zertifikate aber auch systemintern durch den Datenbankserver oder die Mobilgeräte-Applikation erstellt werden.

Unter anderem können Zertifikate auch in Abhängigkeit von Situationsdaten erzeugt werden. So kann eine Mobilgeräte-Applikation ein Zertifikat etwa dann ausgeben, wenn es an einem bestimmten Ort unter Einbeziehung einer Unterschrift erstellt werden soll. Sind Unterschrift und Ort als Identifikation einer Person plausibel, kann ein Zertifikat ausgegeben werden. Hierfür kommen unterschiedlichste Situationsdaten in Betracht, darunter Bilder, Texte, Nummerncodes, GPS-Daten, Kennungen, MAC-Adressen, IP-Adressen, SIM-Kartennummern oder IMEI-Nummern, wobei diese Aufzählung beispielhaft, jedoch nicht abschließend zu verstehen ist.

Die vorstehend beschriebene Erfindung wird im Folgenden anhand eines Ausführungsbeispiels näher erläutert.

Es zeigen
- Figur 1: ein Handshake-Diagramm des Kommunikationsablaufs bei der erfindungsgemäßen Signierung, bei dem das zu unterzeichnende Dokument auf einem Rechner dargestellt wird, sowie
- Figur 2: eine vereinfachte Variante des in Figur 1 gezeigten Ablaufs, bei dem das Dokument direkt auf dem freigebenden Mobilgerät dargestellt wird.

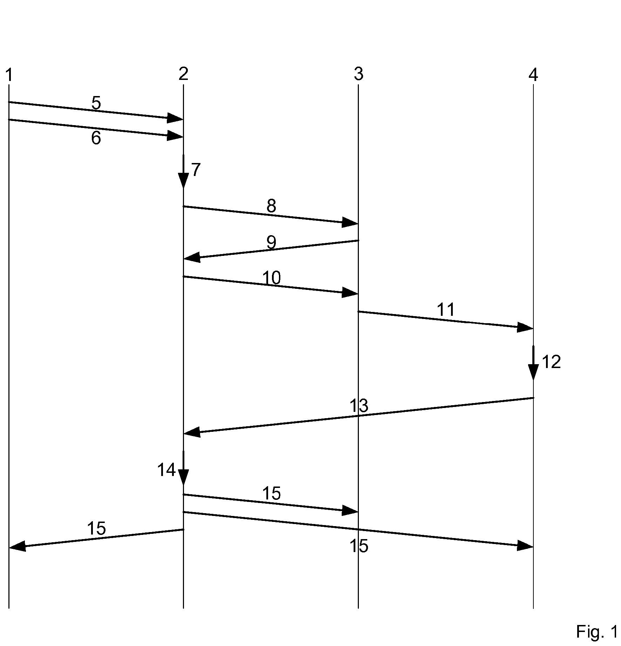

Figur 1 zeigt ein Handshake-Diagramm zwischen vier Kommunikationsteilnehmern, wobei eine Authentifizierung eines Dokuments, welches einem Anwender vorliegt, durch einen Unterzeichner erfolgen soll. Dieser Text kann beliebigen Ursprungs sein. Der Anwender möchte jedoch sicher sein, dass der Text authentisch ist und hierzu eine sicher Bestätigung des Unterzeichners erhalten.

Dazu lädt der Anwender von einem Anwenderrechner 1 aus in einem Schritt 5 das zu bestätigende Dokument auf den Datenbankserver 2 hoch. Außerdem wird in einem Schritt 6 dem Dokument von dem Anwender eine Kennung des Unterzeichners zugeordnet, so dass bei dem Datenbankserver 2 hinterlegt ist, wer das Dokument signieren soll. Bei der Kennung handelt es sich hier um eine E-Mail-Adresse des Unterzeichners, anhand welcher der Datenbankserver 2 nunmehr den Unterzeichner adressieren kann.

Der Datenbankserver 2 wird dazu zunächst in einem Schritt 7 zu dem Dokument einen elektronischen Fingerabdruck in Form eines Hashwerts erzeugen, welcher das Dokument eindeutig charakterisiert. Ferner wird er die mit dem Dokument verbundene Kennung auslesen. In Schritt 8 wird aufgrund der von dem Anwenderrechner erhaltenen Daten der Datenbankserver 2 nunmehr eine Notifikation erstellen, die er als E-Mail an die als Kennung verwendete E-Mail-Adresse des Unterzeichners sendet. Die Notifikation enthält einen Link, über den der empfangende Unterzeichner an seinem Unterzeichnerrechner 3 einen Zugriff auf das Dokument erhält. Da der Zugriff jedoch lediglich dem Unterzeichner, und nicht einem beliebigen Dritten gewährt werden soll, wird in Schritt 9 der Datenbankserver 2 den Zugriff auf das Dokument nur dann gewähren, wenn der Unterzeichner sich gegenüber dem Datenbankserver 2 authentifizieren kann, etwa indem er sich mit Login-Daten, die zu der bei dem Dokument hinterlegten Kennung passen, auf dem Datenbankserver 2 einloggt.

Dann wird in einem Schritt 10 dem Unterzeichner auf seinem Unterzeichnerrechner 3 das Dokument im Zusammenhang mit einem Barcode angezeigt. Der Unterzeichner prüft nun das Dokument. Entscheidet sich der Unterzeichner, das Dokument zu signieren, so wird er nun sein Mobilgerät 4 zur Hand nehmen und den Barcode einscannen. Dies erfolgt mit einer dezidierten Authentifikations-Applikation. In einem Schritt 11 wird mit dem Einscannen des Barcodes eine Aufforderung zur Authentifizierung gestartet, der Unterzeichner wird aufgefordert, nach einer Prüfung des Textes des Dokuments am Mobilgerät 4 die Authentifizierung vorzunehmen, indem biometrische Daten wie insbesondere sein biometrischer Fingerabdruck eingelesen oder sein Gesicht vermessen wird. Bei dem Mobilgerät 4 erfolgt in Schritt 12 nun eine Prüfung der Übereinstimmung von Kennung und biometrischen Daten. Kann bei dem Mobilgerät 4 festgestellt werden, dass der Unterzeichner tatsächlich selbst die Freigabe erteilt, so überträgt in Schritt 13 eine mithilfe eines in dem Speicher des Mobilgeräts 4 hinterlegten Zertifikats des Unterzeichners generierte Signaturdatei an den Datenbankserver 2, welche eine Verknüpfung zwischen dem Dokument und dem Zertifikat darstellt.

In einem Schritt 14 empfängt der Datenbankserver 2 die Signaturdatei von dem Mobilgerät 4, speichert diese zusammen mit dem Dokument und generiert neben einem Hashwert zu dem Dokument nun auch eineindeutige Hashwerte für die Signaturdatei. Das Dokument ist nun unterzeichnet und verbleibt so in der Datenbank des Datenbankservers 2. Zum Abschluss des Verfahrens versendet der Datenbankserver 2 eine Bestätigung über die erfolgreiche Signierung an den Anwenderrechner 1, den Unterzeichnerrechner 3 und das Mobilgerät 4.

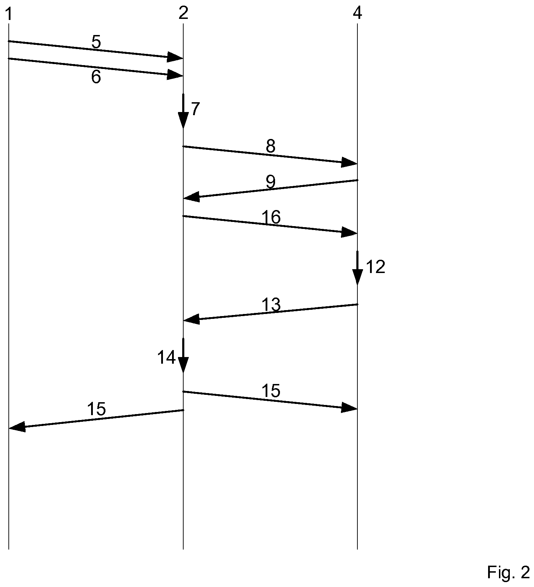

Wird, wie in Figur 2 dargestellt, das Dokument direkt auf dem Mobilgerät angezeigt, kann der Ablauf sich etwas unterscheiden. Auch hier lädt der Anwender von dem Anwenderrechner 1 aus in Schritt 5 das zu bestätigende Dokument auf den Datenbankserver 2 hoch und fügt in Schritt 6 die Kennung des Unterzeichners hinzu. Der Datenbankserver 2 ergänzt in Schritt 7 einen Hashwert für das Dokument.

Eine Notifikation sendet der Datenbankserver in Schritt 8 nun aber als Push-Nachricht direkt an die Authentifizierungs-Applikation auf dem Mobilgerät 4. Öffnet der Unterzeichner diese Applikation auf seinem Mobilgerät 4, so wird das Mobilgerät in Schritt 9 das Dokument von dem Datenbankserver 2 aufrufen und dem Unterzeichner in Schritt 16 anzeigen. Da dies direkt in der Authentifizierungsapplikation abläuft entfällt hier die Anzeige eines zusätzlichen Barcodes, sowie im Folgenden der Arbeitsschritt des Einscannens des Barcodes.

Im Übrigen läuft die Authentifizierung nun so ab wie zuvor. Der Unterzeichner wird wiederum zur Prüfung des Textes aufgefordert, kann dann seine biometrischen Daten einlesen und so die Signierung vornehmen. Das Mobilgerät 4 gibt die Authentifizierung an den Datenbankserver 2 weiter und sendet in Schritt 13 die Signaturdatei an den Datenbankserver 2, wo die Signaturdatei zusammen mit dem Dokument und zugehörigen Hashwerten abgelegt wird. Die abschließende Bestätigung über die erfolgreiche Signierung ergeht nun nur noch an das Mobilgerät 4 und den Anwenderrechner 1.

Vorstehend beschrieben ist somit ein Verfahren zur Speicherung elektronisch signierter Dokumente, wobei die Signaturdatei als Verknüpfung zwischen dem Dokument und einem Zertifikat eines Unterzeichners von dem einer Datenbank zugeordneten Datenbankserver mit jeweils einem elektronischen Fingerabdruck, sowie vorzugsweise nochmals mit einem gemeinsamen elektronischen Fingerabdruck versehen werden. So kann eine sichere Authentifizierung geleistet werden.

### BEZUGSZEICHENLISTE

- 1: Anwenderrechner
- 2: Datenbankserver
- 3: Unterzeichnerrechner
- 4: Mobilgerät
- 5: Speichern eines Dokuments
- 6: Zuordnung einer Kennung
- 7: Zuordnung eines Hashwerts zum Dokument
- 8: Erstellen und Senden einer Notifikation
- 9: Aufruf des Dokuments in der Datenbank
- 10: Anzeige des Dokuments mit einem Barcode
- 11: Aufforderung zur Authentifizierung
- 12: Prüfen von Kennung und biometrischen Daten
- 13: Authentifizierung und Senden einer Signaturdatei
- 14: Verknüpfen/Erstellen von Hashwerten zu Signatur/Dokument
- 15: Bestätigung
- 16: Anzeige des Dokuments auf dem Mobilgerät

## Patentansprüche

1. Verfahren zur Speicherung elektronisch signierter Dokumente, bei dem einem elektronisch signierten Dokument wenigstens eine im Zusammenhang mit dem signierten Dokument in einer Datenbank eines Datenbankservers (2) gespeicherte Signaturdatei eines Unterzeichners des signierten Dokuments als Verknüpfung zwischen dem Dokument selbst und einem dem Unterzeichner eindeutig zugeordneten Zertifikat zugeordnet ist,
**dadurch gekennzeichnet, dass** nach einer erfolgten Signatur mithilfe eines dem wenigstens einen Unterzeichner eineindeutig zugeordneten Zertifikats eine Signaturdatei erzeugt und im Zusammenhang mit dem Dokument in der Datenbank gespeichert, also mit diesem verknüpft wird, so dass ein vollständig unterzeichnetes Dokument aus dem Dokument selbst, sowie einer Signaturdatei für jeden Unterzeichner, welche eine Verknüpfung zwischen einem dem jeweiligen Unterzeichner eindeutig zugeordneten Zertifikat und dem Dokument selbst ist, besteht, wobei der Datenbankserver (2) auf Anfrage eine Integritätsprüfung vornimmt und lediglich im Falle des Feststellens der Integrität des Dokuments und der wenigstens einen Signaturdatei die Gültigkeit der Signatur bestätigt.

2. Verfahren gemäß Anspruch 1, **dadurch gekennzeichnet, dass** die wenigstens eine Signaturdatei im Zuge eines Signaturvorgangs vermittels des Zertifikats des Unterzeichners erstellt und in die Datenbank des Datenbankservers (2) importiert, mit dem Dokument verknüpft und zu der Signaturdatei ein elektronischer Fingerabdruck erstellt wird, sofern der Datenbankserver (2) eine Authentifizierung des der Signaturdatei zugeordneten Unterzeichners erhält und eine Korrespondenz zwischen der Signaturdatei und der dem Dokument zugeordneten eineindeutigen Kennung des Unterzeichners feststellt.

3. Verfahren gemäß Anspruch 2, **dadurch gekennzeichnet, dass** ein elektronischer Fingerabdruck zu einem Dokument unmittelbar nach dem Speichern in der Datenbank erstellt wird und dem Dokument wenigstens eine in der Datenbank hinterlegte eineindeutige Kennung eines Unterzeichners zugeordnet wird.

4. Verfahren gemäß einem der Ansprüche 2 oder 3, **dadurch gekennzeichnet, dass** vermittels des auf einem Mobilgerät (4) eines Unterzeichners gespeicherten der Zertifikats eine Signaturdatei generiert und in die Datenbank importiert wird, nachdem an dem Mobilgerät (4) eine Identifizierung des Dokuments und eine Authentifizierung des Unterzeichners erfolgt ist.

5. Verfahren gemäß Anspruch 4, **dadurch gekennzeichnet, dass** der Datenbankserver (2) zur Identifizierung des Dokuments eine die eineindeutige Kennung des Unterzeichners enthaltende Notifikation an den Unterzeichner sendet, welche auf das in der Datenbank gespeicherte Dokument verweist, wobei das Dokument zur Identifizierung durch den Unterzeichner direkt auf einem Bildschirm des Mobilgeräts (4) dargestellt wird oder die Identifizierung des Dokuments durch ein Einlesen eines mit dem anderweitig dargestellten Dokument verbundenen grafischen Codes durch eine optische Leseeinrichtung des Mobilgeräts (4) erfolgt.

6. Verfahren gemäß einem der Ansprüche 4 oder 5, **dadurch gekennzeichnet, dass** die Authentifizierung des Unterzeichners durch eine Codeeingabe oder eine biometrische Abtastung mittels biometrischer Erfassungseinrichtungen des Mobilgeräts erfolgt, sofern die mit dem Dokument verbundene Kennung mit der Signaturdatei des Unterzeichners übereinstimmt.

7. Verfahren gemäß einem der Anspruche 3 bis 6, **dadurch gekennzeichnet, dass** die eineindeutige Kennung des Unterzeichners im Vorfeld einer Signierung bei dem Datenbankserver (2) hinterlegt wird.

8. Verfahren gemäß einem der Ansprüche 2 bis 7, **dadurch gekennzeichnet, dass** der Datenbankserver (2) dem Unterzeichner eine Notifikation in Form einer E-Mail oder einer Push-Nachricht über die Verknüpfung seiner eineindeutigen Kennung mit einem Dokument an eine mit der eineindeutigen Kennung verknüpfte Adresse versendet.

9. Verfahren gemäß einem der vorhergehenden Ansprüche, **dadurch gekennzeichnet, dass** es sich bei dem elektronischen Fingerabdruck um eine Prüfsummenberechnung, vorzugsweise die Berechnung eines Hashwerts, handelt.

10. Verfahren gemäß Anspruch 9, **dadurch gekennzeichnet, dass** die Integritätsprüfung in der abermaligen Berechnung der Prüfsummen, vorzugsweise eines Hashwerts, sowohl des gespeicherten Dokuments, als auch aller mit diesem verknüpfter Signaturen und der Verknüpfungen besteht.

11. Verfahren gemäß einem der vorhergehenden Ansprüche, **dadurch gekennzeichnet, dass** das Zertifikat von dem Datenbankserver (2), einer Mobilgeräte-Applikation oder einer externen Zertifikatsautorität erstellt wird.

12. Verfahren gemäß Anspruch 11, **dadurch gekennzeichnet, dass** die Erstellung des Zertifikats unter Einbezug von Situationsdaten, insbesondere Bildern, Texten, Nummerncodes, GPS-Daten, Kennungen, MAC-Adressen, IP-Adressen, SIM-Kartennummern oder IMEI-Nummern erfolgt.

## Claims

1. Method for storing electronically signed documents, in which an electronically signed document is assigned at least one signature file of a signatory of the signed document, stored in connection with the signed document in a database of a database server (2), as a link between the document itself and a certificate uniquely assigned to the signatory,
**characterized in that** after a signature has taken place, a signature file is generated, using a certificate that is uniquely assigned to the at least one signatory, and is stored in connection with the document in the database, i.e. linked to it, so that a fully signed document consists of the document itself as well as a signature file for each signatory, which is a link between a certificate uniquely assigned to the relevant signatory and the document itself, wherein the database server (2) performs an integrity check on request and confirms the validity of the signature only if the integrity of the document and the at least one signature file is established.

2. Method according to claim 1, **characterized in that,** during a signature process, the at least one signature file is created by means of the certificate of the signatory, imported into the database of the database server (2) and linked to the document, and an electronic fingerprint is created for the signature file provided that the database server (2) receives authentication of the signatory assigned to the signature file and establishes a correspondence between the signature file and the unique identifier of the signatory assigned to the document.

3. Method according to claim 2, **characterized in that** an electronic fingerprint is created for a document immediately after storage in the database and at least one unique identifier of a signatory stored in the database is assigned to the document.

4. Method according to any one of claims 2 or 3, **characterized in that** a signature file is generated by means of the certificate stored on a mobile device (4) of a signatory and is imported into the database after identification of the document and authentication of the signatory has taken place on the mobile device (4).

5. Method according to claim 4, **characterized in that,** in order to identify the document, the database server (2) sends a notification containing the unique identifier of the signatory to the signatory, which notification refers to the document stored in the database, the document being displayed directly on a screen of the mobile device (4) for identification by the signatory, or the document being identified by reading in a graphic code associated with the otherwise displayed document via an optical reading device of the mobile device (4).

6. Method according to any one of claims 4 or 5, **characterized in that** the signatory is authenticated by code entry or biometric scanning by means of biometric capture devices of the mobile device, provided that the identifier associated with the document matches the signature file of the signatory.

7. Method according to any one of claims 3 to 6, **characterized in that** the unique identifier of the signatory is stored in the database server (2) prior to signing.

8. Method according to any one of claims 2 to 7, **characterized in that** the database server (2) sends the signatory a notification in the form of an e-mail or a push message about the linking of their unique identifier with a document to an address linked to the unique identifier.

9. Method according to any one of the preceding claims,
**characterized in that** the electronic fingerprint is a checksum calculation, preferably the calculation of a hash value.

10. Method according to claim 9, **characterized in that** the integrity check consists in the repeated calculation of the checksums, preferably a hash value, of both the stored document and all the signatures linked thereto and the links.

11. Method according to any one of the preceding claims,
**characterized in that** the certificate is created by the database server (2), a mobile device application or an external certificate authority.

12. Method according to claim 11, **characterized in that** the certificate is created using situational data, in particular images, texts, number codes, GPS data, identifiers, MAC addresses, IP addresses, SIM card numbers or IMEI numbers.

## Revendications

1. Procédé permettant le stockage de documents signés électroniquement, dans lequel au moins un fichier de signature d'un signataire du document signé, stocké en relation avec le document signé dans une base de données d'un serveur de base de données (2), est associé à un document signé électroniquement en tant que combinaison entre le document en lui-même et un certificat associé de manière univoque au signataire,
**caractérisé en ce que,** après qu'une signature est effectuée, un fichier de signature est produit à l'aide d'un certificat associé de manière univoque à l'au moins un signataire et est stocké en relation avec le document dans la base de données, c'est-à-dire qu'il est combiné à celui-ci, de sorte qu'un document entièrement signé se compose du document en lui-même, ainsi que d'un fichier de signature pour chaque signataire, lequel fichier de signature est une combinaison entre un certificat associé de manière univoque au signataire respectif et le document en lui-même, dans lequel le serveur de base de données (2) procède sur demande à un contrôle d'intégrité et confirme la validité de la signature uniquement en cas de constatation de l'intégrité du document et de l'au moins un fichier de signature.

2. Procédé selon la revendication 1, **caractérisé en ce que** l'au moins un fichier de signature est créé au cours d'un processus de signature au moyen du certificat du signataire et est importé dans la base de données du serveur de base de données (2), est combiné au document et une empreinte digitale électronique est créée pour le fichier de signature, pour autant que le serveur de base de données (2) reçoit une authentification du signataire associé au fichier de signature et constate une correspondance entre le fichier de signature et le critère univoque du signataire associé au document.

3. Procédé selon la revendication 2, **caractérisé en ce qu'**une empreinte digitale électronique est créée pour un document immédiatement après le stockage dans la base de données et au moins un critère univoque d'un signataire enregistré dans la base de données est associé au document.

4. Procédé selon l'une des revendications 2 ou 3, **caractérisé en ce qu'**un fichier de signature est généré et importé dans la base de données au moyen de du certificat stocké sur un appareil mobile (4) d'un signataire, après qu'une identification du document et qu'une authentification du signataire ont été effectuées sur l'appareil mobile (4).

5. Procédé selon la revendication 4, **caractérisé en ce que,** pour l'identification du document, le serveur de base de données (2) envoie au signataire une notification contenant le critère univoque du signataire, lequel critère renvoie au document stocké dans la base de données, dans lequel le document est affiché directement sur un écran de l'appareil mobile (4) pour l'identification par le signataire, ou l'identification du document est effectuée par une lecture d'un code graphique lié au document affiché autrement par un dispositif de lecture optique de l'appareil mobile (4).

6. Procédé selon l'une des revendications 4 ou 5, **caractérisé en ce que** l'authentification du signataire est effectuée par une saisie de code ou par un balayage biométrique au moyen de dispositifs de détection biométrique de l'appareil mobile, pour autant que le critère associé au document concorde avec le fichier de signature du signataire.

7. Procédé selon l'une des revendications 3 à 6, **caractérisé en ce que** le critère univoque du signataire est enregistré auprès du serveur de base de données (2) en prévision d'une signature.

8. Procédé selon l'une des revendications 2 à 7, **caractérisé en ce que** le serveur de base de données (2) envoie au signataire, à une adresse combinée au critère univoque, une notification sous la forme d'un courriel ou d'un message poussé concernant la combinaison de son critère univoque à un document.

9. Procédé selon l'une des revendications précédentes,
**caractérisé en ce que** l'empreinte digitale électronique est un calcul de total de contrôle, de préférence le calcul d'une valeur de hachage.

10. Procédé selon la revendication 9, **caractérisé en ce que** le contrôle d'intégrité se compose du calcul répété des totaux de contrôle, de préférence d'une valeur de hachage, tant du document stocké que des combinaisons et de toutes les signatures qui sont combinées au document.

11. Procédé selon l'une des revendications précédentes,
**caractérisé en ce que** le certificat est créé par le serveur de base de données (2), par une application d'appareil mobile ou par une autorité de certification externe.

12. Procédé selon la revendication 11, **caractérisé en ce que** la création du certificat est effectuée en intégrant des données de situation, en particulier images, textes, codes numériques, données GPS, critères, adresses MAC, adresses IP, numéros de carte SIM ou numéros d'identité nationale d'équipement mobile.
